# EUROPÄISCHE PATENTANMELDUNG

(11) **EP 1 646 266 A2**
(43) Veröffentlichungstag der Anmeldung: **12.04.2006**
(21) Anmeldenummer: 05012079.9
(22) Anmeldetag: 04.06.2005
(51) Int. Cl.: H05B 3/14

(54) **Heizungselement auf einer polymeren Innenoberfläche eines Frontmoduls/Stossfängers eines Kraftfahrzeuges in Wirkverbindung mit einer Radarsende- und -empfangseinheit**

(30) Priorität: 07.10.2004 DE 102004049148
(71) Anmelder: REHAU AG + Co, 95111 Rehau (DE)
(72) Erfinder: Auer, Marcel, 3008 Bern (CH); Quandt, Edgar, 95185 Gattendorf (DE); Meiler, Matthias, 95185 Neugattendorf (DE); Opel, Ernst, 95126 Schwarzenbach/ Saale (DE)

(57) **Zusammenfassung**

Die Erfindung betrifft eine Heizfolie (1) auf der polymeren Innenoberfläche eines Frontmoduls/Stoßfängers (15) wobei die Heizfolie (1) in Wirkverbindung mit einer Radarsende- und -empfangseinheit (8) steht und das Radarsignal (6) bei widrigen, insbesondere winterlichen Witterungsbedingungen in seiner Funktion verwendet werden kann. Weiterhin beschreibt die Erfindung eine Heizungselementanordnung in Wirkverbindung zu einer Radarsende- und -empfangseinheit (8).

## Beschreibung

Die Erfindung betrifft ein Heizungselement auf der polymeren Innenoberfläche eines Frontmoduls/Stoßfängers eines Kraftfahrzeuges gemäß Oberbegriff des Patentanspruchs 1 sowie eine Heizungselementanordnung nach Patentanspruch 12.

Aus dem Stand der Technik sind polymere Außenhautverkleidungen bei Kraftfahrzeugen bekannt. Derartige Verkleidungsteile dienen beispielsweise als Stoßfänger bzw. Frontmodul mit eingebauten Funktionalitäten, umfassend bspw. Abstandssensoren, Beleuchtungsmittel, Kraftfahrzeugkennzeichenaufnahmen oder dergleichen. Insbesondere integrierte Radarstrahlungs- und Empfangsvorrichtungen zur Objekt-/Fußgängererkennung werden zunehmend in den nächsten Jahren in Kraftfahrzeugen zum Einsatz kommen. Dabei ist der Einbau-/Verbauort derartiger Radarempfangs- und Sendevorrichtungen je nach vorgegebenen Einbauverhältnissen des Kraftfahrzeuges unterschiedlich und es sind verschiedene Anordnungen hierzu im Stand der Technik beschrieben.
Vorteilhafterweise werden Verbauanordnungen gewählt, die Radarempfangs- und Sendevorrichtungen hinter einem Stoßfänger mittels geeigneter Halteeinrichtung befestigen. Damit wird zum einen eine Schutzwirkung der Radarsensoreinheit gegenüber beispielsweise Steinschlag erreicht und zum anderen ein verdeckter Einbau, so dass die Außenansicht des Frontmoduls/ Stoßfängers in seiner optisch prägenden Gesamtansicht das Kraftfahrzeug nicht nachteilig im Erscheinungsbild beeinflusst. Auch andere Anordnungen der Radarsensoren im Frontmodulbereich eines Kraftfahrzeuges, wie bspw. hinter einem Kühlergrill oder Kennzeichnungsträger, sind derzeit in der Erprobung.
Die Radarsensoren werden dabei eingekapselt oder aber in Aufnahmevorrichtungen verbracht, so dass die schaltungsintegrierte Radarsensorik keinen Umwelteinflüssen wie Schnee, Regen oder nasskalten Witterungsverhältnissen direkt ausgesetzt ist.

Nachteilig an solchen Aufnahmevorrichtungen ist, dass durch die jeweilige Wetterlage bedingt, der Einfluss von Feuchtigkeit, Eis oder Schnee, die Sende- und Empfangsradarstrahlcharakteristik so verändert, dass die Objekterkennung im Vorausfahrfeld des Kraftfahrzeuges eingeschränkt wird. In der Veröffentlichung IEEE Intelligent Systems, Vol. 13, Nr. 6 aus dem Jahre 1999 mit dem Titel "Autonomous Driving Approaches Downtown", werden auf Radar basierende bzw. optische Bilderkennungssysteme für Kraftfahrzeuge beschrieben, die eine Visualisierung der Objekte (Fußgänger, Häuser, Fahrzeuge, Verkehrszeichen etc) erreichen.

In der Publikation VDI Kongress Berlin, September 2001 mit dem Titel: "Aktiv-reversible Schutzkonzepte zur Erfüllung der Fußgängerschutzanforderungen nach EEVC WG 17", ist die Verknüpfung der radarsensorischen Objekterkennung im Zusammenhang mit dem Einsatz eines aktiven Fußgängerschutzes offenbart und eine generische Testvorrichtung gezeigt, die zur Auslegung unterschiedlicher Sensorsysteme für ein aktiv-reversibles Schutzkonzept führen. Insbesondere darin zum Einsatz kommende so genannte Pre-Crash-Sensoren in Verbindung mit Kontaktfoliensensoren, die auf der Außenhaut eines Stoßfängers aufgebracht werden und zur Auslösung eines Fußgängerschutzsystems dienen, werden in diesem Stand der Technik diskutiert.
Nachteilig bei diesen Auslegungskonzepten ist, dass der Einfluss von Witterungsverhältnissen wie Schnee, Eis oder Regen/Nässe , die Objektbildauflösung von Radarsignalen beeinflusst und somit im Falle eines Fußgängerzusammenstoßes die zu aktivierende Fußgängerschutzvorrichtung nicht zum Auslösen führt. Weiterhin sind witterungsbedingte Einflüsse auf die Radarsignalcharakteristik bekannt, die im Rahmen einer nachgeschalteten dynamischen Bildanalyse zu Fehlinformationen bzgl. des Fahrvorausfeldes/Abtastfeldes führen können, so dass bspw. im Falle von Eisregen, Witterungsverhältnisse vorliegen, die eine radarsensorische Erfassung und somit Objekterkennung nachteilig beeinflussen, obwohl die Witterungsbedingungen die Einsatzzuverlässigkeit im Kraftfahrzeug erforderlich machen.

In der Veröffentlichung:" Werkzeuge und Testverfahren zur Entwicklung und Analyse von ACC-Systemen (Adaptive Cruise Control)", Aachener Kolloquium Fahrzeug- und Motorentechnik 2000, sind Testanforderungen zukünftiger ACC-Sensorik auf Radarbasis aufgezeigt, die den Witterungsbedingungen Stand halten sollen.

Der Einsatz im Zusammenhang mit einer intelligenten Geschwindigkeitsregelung von auf Radar basierten ACC-Systemen führt weiterhin zu einer Integration der Radarsensoreinheit mit Sende- und Empfangsmodul (TRM), wobei in diesen Modulen zunehmend die MMIC-Technik Verwendung findet, d.h. monolitisch integrierte Mikrowellenschaltungen auf Siliziumbasis (MMIC- Monolithic Microwave Integrated Circuits), die gegenüber der bisherigen Gunn-Dioden-Technik Vorteile der höheren Packungsdichte im Auf- und Einbau bieten, sowie die Kompatibilität zu anderen zusätzlichen adaptiven Sensorvorrichtungen.
Auch die vorgenannten Radarsensoren mit integrierter Auswerteeinheit, werden durch widrige Witterungsverhältnisse beeinflusst, so dass eine Signaldämpfung/-verfälschung erfolgen kann. Insbesondere die Radar-Signaldämpfung durch bspw. Vereisung in Verbindung mit im Eis eingelagerten Schmutzpartikeln im Frontbereich eines Kraftfahrzeuges, führt daher zu signifikanten nachteiligen Einflüssen hinsichtlich der gewünschten bzw. erforderlichen Objekterkennung und -identifizierung in einem Fahrvorausfeld von ca. 100 m im Falle bspw. des Einsatzes von Long-Range-Radar (LRR). Im Falle des LRR wird mittels des Frequency-Modulated-Continous-Wave-Radar-Verfahrens (FMCW-Radar-Verfahren) im Frequenzbereich von 76-78 GHz gearbeitet, wobei die Radarwelle linear moduliert ist. Der Einbau im Kraftfahrzeug wird verdeckt und unter Zuhilfenahme eines Radoms (Abdeckung) derzeit technisch realisiert.

Der Erfindung liegt daher die Aufgabe zu Grunde, ein Heizungselement anzugeben, das die Radarstrahldurchlässigkeit von Radarempfangs- und -sendeeinheit bei schlechten Witterungsverhältnissen verbessert und die Zuverlässigkeit der radargesteuerten Sensorik somit erhöht. Die Erfindung hat ferner die Aufgabe, eine entsprechende Heizungselementanordnung für eine Radarempfangs- und -sendeeinrichtung im Frontmodul eines Kraftfahrzeuges anzugeben.

Diese Aufgabe ist erfindungsgemäß gelöst mit den im Kennzeichnungsteil des Anspruchs 1 angegebenen Merkmalen und gemäß Anspruch 12.

Erfindungsgemäß wurde erkannt, dass durch den Einsatz einer Heizfolie, aufgebracht auf der Innenseite eines polymeren Frontendmoduls/Stoßfängers in Wirkverbindung zur Radarsende-/-empfangseinheit stehend, die Strahlungscharakteristik der Radarsende- und -empfangssignale im Falle von winterlichen Schlechtwetterlagen verbessert wird. Insbesondere wird eine Vereisung der Radarsensoreinheit in Wirkverbindung zum Frontendmodul/Stoßfänger durch die polymere Heizfolie vermieden.

Die zur erfindungsgemäßen Verwendung kommende Heizfolie besteht aus einem Polycarbonat (PC) und/oder Polybutylenterephtalat (PBT) bzw. aus einem vernetzten Polyethylen (PE-X) mit integrierten Heizleiterbahnen im Siebdruckverfahren aufgebracht und ist materialseitig auf das aus polymerem Material bestehende Frontend-/Stoßfängermodul mit Kennzeichnungsträger abgestimmt.

Die Dicke der Heizfolie beträgt ca. 0,1 bis 0,3 mm je nach Ausführung, wobei die Breite der Leiterbahn zwischen ca. 0,4 bis 2 mm ist und der Gesamtwiderstandswert des Leiterbahnarrays bei ca. 4 bis 12 Ohm liegt. Hinsichtlich der Orientierung der Leiterbahnen der Heizfolie wurde erfindungsgemäß erkannt, dass mittels einer ca. 45° bis 90° Grad geneigten Leiterbahnanordnung senkrecht zur Polarisation des Radarsende-Empfangsstrahls, gute Radarsende- und Empfangscharakteristiken erreicht werden. Insbesondere die Radar relevanten Werte, wie horizontale und vertikale Radarkeulenbreite, deren Lage und das Signal- zu Rauschverhältnis, werden durch die Heizfolie mit der ca. 45 ° bis 90° Grad geneigten Leiterbahnauslegung nicht nachteilig beeinflusst. Die Abstände zueinander benachbarter Heizleiterbahnen betragen in Radardurchstrahlrichtung ca. 2,8 bis 6 mm, so dass Radarbeugungsphänomene durch die Heizleiterbahnen im Frequenzbereich von 76 bis 78 GHz ausgeschlossen werden können. Die gesamte Heizfolie ist erfindungsgemäß hierzu in einen Innenbereich und Außenbereich unterteilt, wobei der Innenbereich aus äquidistanten um 45° bis 90°Grad zur Radarpolarisationsachse senkrecht geneigte Leiterbahnen im Abstand zueinander von jeweils 2,8 bis 6 mm besteht und aus einem Außenbereich, in dem keine Radardurchstrahlung erfolgt. Im Außenbereich können daher die Leiterbahnen in ihrem jeweiligen Abstand zueinander enger ausgelegt sein.
Der Außen- und Innenbereich der Heizfolie wird über Anschlusspads mittels konventioneller elektrischer Verbindungsmittel mit dem Kraftfahrzeugbordnetz verbunden bzw. via eines zwischengeschalteten Regelelements, wie bspw. eines PTC- oder NTC-Elements in Verbindung mit einer Thermistorschaltung zur elektrischen Leistungsbegrenzung. Die Heizleistung der Heizfolie ist dabei über die Länge der Leiterbahnen im Innen- oder Außenbereich, d.h. über den Widerstand derselben, so ausgelegt, dass das Verhältnis Außenbereichsheizungleistung zur Innenbereichsheizungsleistung der Heizfolie zwischen 3:1 und 1,05:1 liegt. Damit wird vorteilhaft gewährleistet, dass die Heizleistung im Randbereich der Heizfolie stärker wirkt, da hier die Kontaktfläche zu bspw. den kalten Zonen einer Stoßfängeranordnung im Winter, eine größere Aufheizleistung erfordert, als der Innenbereich.

Durch diese Anordnung wird zudem sichergestellt, dass der Außenbereich der Heizfolie als Zone mit erhöhter Heizleistung ausgelegt ist, wobei der Innenbereich der Heizfolie im Bereich des Radarstrahlendurchgangs, eine den Strahleninterferenzbedingungen entsprechende Anordnung der Heizleiter mit den notwendigen Abständen zueinander umfasst und deren Orientierung relativ zur polarisierten Radarstrahlenachse im Bereich von 45° - 90° wählbar ist, ohne dass es durch die Leiterbahnanordnung im Innenbereich zu störenden Radarsignalverläufen/ -interferenzen kommt.
Ein elektronisches Regelelement in schaltungstechnischer Verbindung mit der Heizfolie kann bspw. so ausgelegt werden, dass ein definierter Einschaltpunkt für das Heizen mittels Heizfolie einstellbar ist. Hierzu können angepasst an die Außentemperatur, Temperaturbereichsintervalle von bspw. -15°C bis +15°C frei wählbar und angepasst an die Außenverhältnisse voreingestellt werden.
Vorteilhafterweise zeigten verwendete PTC- bzw. NTC-Elemente eine gute elektronische Ansteuercharakteristik als elektronisches Regelelement, so dass bspw. die Enteisung im Radarstrahlendurchlassbereich der Heizfolie (innere Heizzone) in kürzester Zeit nach Fahrtantritt möglich ist. Der geringe elektrische Leistungsverbrauch der elektronischen PTC- oder NTC-Elemente in Verbindung mit der Heizfolie gestattet somit in der kalten Jahreszeit einen geringen elektrischen Leistungsverbrauch der erfindungsgemäßen Anordnung. Die Verbindung zum Bordnetz des Kraftfahrzeuges kann dabei auch mittels konventioneller elektrischer Steckverbindung erfolgen.

Zur Reduzierung der erforderlichen Heizwärmeleistung der Heizfolie in Wirkverbindung mit der Radarsende- und -empfangseinheit kann es vorteilhaft sein, eine zusätzliche Abdeckfolie aus geschäumten Polyethylen oder Polypropylen - auch vernetztes Poly - propylen - mit einer Schichtdicke im Bereich von etwa 1 bis 1,5 mm zu verwenden.
Diese zusätzliche Abdeckfolie kann auf ihrer Innenseite, d.h. hin zu den Leiterbahnen der Heizfolie, mit einer Siliziumoxid- (SiO) und/oder Siliziumnitrid- (SiN) und/oder Siliziumoxinitrid-Beschichtung (SiON) versehen sein. Der Vorteil dieser SiO- und/oder SiN- und/oder SiON -Beschichtung liegt darin, dass mittels einer geeignet gewählten Schichtdicke dieser Schichten oder Schichtfolge, die durch die Heizfolie erzeugte Wärmestrahlung - im Sinne einer Wärmereflexionsbeschichtung - somit im Innern der Sandwichanordnung (Heizfolie und Abdeckfolie) gehalten wird. Damit werden Wärmeverluste bei extremen Kältebedingungen vorteilhaft reduziert.
Die beschichtete Abdeckfolie kann kostengünstig in konventioneller Klebetechnik auf die Heizfolie aufgebracht werden.

Gerade die Verwendung von SiO- und/oder SiN- und/oder SiON-Schichten, aufgebracht auf die Abdeckfolie, gewährleistet somit zusätzlich einen Schutz vor Wärmeverlust und mechanischer Beschädigung der Heizfolie.
Ein Kurzschluss, in Folge mechanischer Beschädigung, kann damit ebenfalls vorteilhaft verhindert werden, so dass die Lebensdauer der Heizfolie in Wirkverbindung mit der Radarsende-/-empfangseinheit erhöht wird. Diese zusätzliche Schichtfolge (SiO-; SiN-; SiON-Schicht) hat weiterhin den Vorteil, dass hierbei eine Dämpfung des Radarsende- und - empfangssignals im Bereich von 76 -78 GHz Sendefrequenz nur minimal erfolgt. Hierzu sind zweckmäßig Schichtdicken der SiO- und/oder SiN- und/oder SiON-Schichten im Bereich von 300 bis 900 µm aufgebracht.

Die Abdeckfolie gewährleistet vorteilhaft auch den Schutz vor Schmutzwassereintrag bzw. Eintrocknung von Salzwasser in Folge der Beheizung der Heizfolie während des Betriebs. Zur weiteren Minimierung des Schmutzwasser- oder Salzwassereintrags auf der Heizfolienoberfläche, kann die Anordnung bestehend aus Heizfolie und aufgebrachter innenseitig beschichteter Abdeckfolie, randseitig bspw. mittels eines Versiegelungslacks oder mittels einer Versiegelungspaste oder Versiegelungsschaums oder Schmelzklebers eingefasst werden.

Die erfindungsgemäße Heizfolie kann somit auf die Rückseite eines aus polymeren Material bestehenden Frontendmoduls/Stoßfängers im Bereich bspw. des Kennzeichnungsträgers, aufgebracht werden. Die verwendeten polymeren Materialien umfassen eine Gesamtdicke der Anordnung bestehend aus Heizfolie mit Abdeckung, in Verbindungen mit der Dicke des Frontmoduls/Stoßfängers, die im Bereich von 2,2 bis 3,8 mm liegt und weist eine Radarstrahlendämpfung von 0,4 bis 2 dB pro Flächeneinheit auf.

Untersuchungen an unterschiedlichen polymeren Frontendmodul/Stoßfängermaterialien, bestehend aus einer Polycarbonat-Polybutylenterephtalat-Materialmischung (PC-PBT-Materialmischung) bzw. aus einer Polypropylen- Ethylen-Propylen-Dien-Monomer-Materialmischung (PP-EPDM-Mischung) zeigten in Verbindung mit der Heizfolie und Abdeckfolie somit sehr gute Radarsende- und -empfangscharakteristiken.

Erfolgte Bewitterungssimulationsversuche in einer Klimakammer bei minus 10 ° C mit aufgebrachter Heizfolie einschließlich Abdeckfolie auf der Innenseite eines Frontendmoduls/Stoßfängers in Wirkverbindung zur Radarsende- und -empfangseinheit stehend, zeigten im Bereich des Kennzeichenträgers, dass die Vereisung innerhalb von kürzester Zeit bei Heizleistungen von bspw. 10 bis 150 W aufgeschmolzen wurden und somit die radarsensorische Funktionsfähigkeit bei widrigen und kalten Witterungsverhältnissen wieder hergestellt werden konnte.
Selbst die Verwendung einer Abdeckfolie mit einer Wärmeisolierbeschichtung aus SiO-und/oder SiN- und/oder SiON-Schichten , aufgebracht auf der Innenseite eines Frontendmoduls/ Stoßfängers im Bereich des Kennzeichnungsträgers, zeigten in Wirkverbindung zur Radarsende-Detektoreinheit, keine signifikante Radarsignalverzerrung bzw. -dämpfung.

Weiterhin wurde erfindungsgemäß erkannt, dass auch mehrere, redundant ausgelegte Heizkreise - im Sinne mehrerer parallel geschalteter Heizkreise - zum Einsatz kommen können. Dies bietet den Vorteil, dass bspw. je nach Auslegung der Radarsende-/-empfangseinheit in Verbindung mit der Heizfolienanordnung eine Heizzonenaufteilung geschaffen wird, die bei Beschädigung eines Heizkreises der Heizfolie, die Heizwirkung der anderen funktionsfähigen Heizkreise ermöglicht.

Mit der Verwendung der erfindungsgemäßen Heizfolie und deren Anordnung, aufgebracht auf der Innenseite eines aus polymeren Material bestehenden Frontendmoduls/ Stoßfängers bspw. im Bereich eines Kennzeichnungsträgers in Wirkverbindung zur Radarsender-Detektoreinheit stehend, werden somit Bedingungen für die Radarsende-/-empfangseinheit geschaffen, wie sie sonst nur in warmen Jahreszeiten vorteilhaft vorliegen.

Somit wird gesamthaft die Leistungsfähigkeit der Radarsensoreinheit unter den winterlichen Bedingungen verbessert und schafft damit erst die Voraussetzung für einen ganzjährigen wirksamen Betrieb, so dass bspw. der Fußgängerschutz im Crashfall oder eine Abstandsmessung im Fahrvorausfeld zu anderen Verkehrteilnehmern, bei winterlich widrigen Witterungsverhältnissen zuverlässig erfolgen kann.
- Fig. 1: zeigt schematisch eine Heizfolie mit einem Innen- und Außenbereich mit Leiterbahnen und elektrischem Anschlusspad in Verbindung mit einem Regelelement und Bordnetz, aufgebracht auf der Innenseite eines Frontendmoduls/Stoßfängers im Bereich des Kennzeichnungsträgers,
- Fig. 2: zeigt schematisch einen Aufbau der Heizfolie mit innenbeschichteter Abdeckfolie,
- Fig. 3: zeigt schematisch eine Anordnung Frontmodul mit Heizfolie in Wirkverbindung mit der Radarsende- und -empfangseinheit.

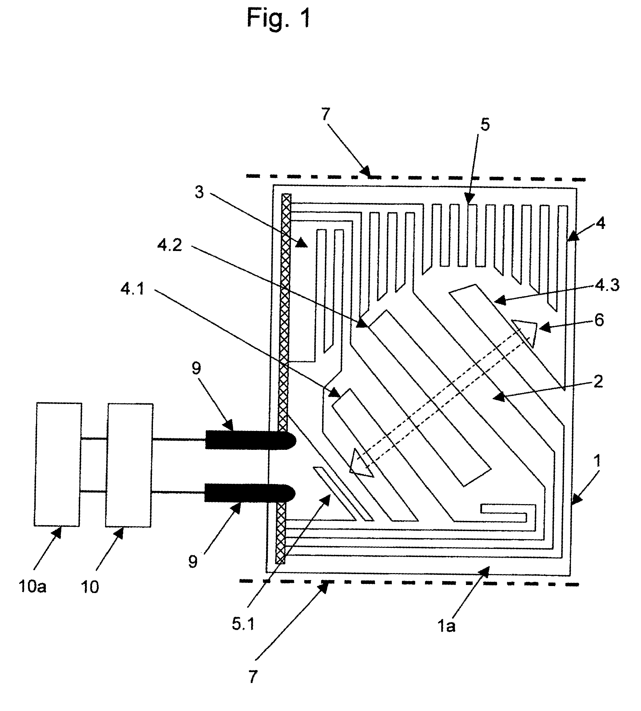

In Fig. 1 ist die erfindungsgemäße Heizfolie (1) mit einem Innen- und Außenbereich (2,3), den zugehörigen Leiterbahnen (4,5) beispielhaft gezeigt. Die Leiterbahnen (4) des Innenbereichs (2) der Heizfolie (1) sind relativ zur Polarisationsrichtung des als Doppelpfeil angedeuteten Radarsende- und Empfangsstrahls (6) geneigt (Winkelbereich von 45° bis 90 ° Grad) angeordnet. Die Heizfolie (1) ist auf bspw. der Innenseite eines Frontmoduls/Stoßfängers aus polymeren Material bestehend im Bereich des Kennzeichnungsträgers (7) aufgebracht und steht in Wirkverbindung mit der nicht weiter dargestellten Radarsende-/-empfangseinheit (8).

Die Anschlusspads (9) dienen als Verbindung zum Kraftfahrzeugbordnetz (10a) via Regelelement (10), das ein PTC- oder NTC-Element sein kann. Die Abstände der Leiterbahnen (4) des Innenbereichs (2) der Heizfolie (1) zueinander, liegen im Bereich von 2,8 bis 6 mm und erfüllen somit die Bedingung, dass der polarisierte Radarstrahl (6) - mit Doppelpfeil dargestellt - der Radarsende-/-empfangseinheit (8) bei einer Frequenz von 76-78 GHz keine Beugung erfährt. Die Breite der Leiterbahnen (4) liegt im Bereich von 0,4 bis 2 mm.

Die gezeigte Heizleiterbahnanordnung (4; 4.1, 4.2, 4.3) ist im Innenbereich (2) der Heizfolie (1) redundant ausgelegt. Damit wird einem elektrischen Ausfall einer inneren Heizleiterbahn (4.1, 4.2, 4.3) vorgebeugt, ohne die Gesamtfunktionsfähigkeit der Heizfolie (1) zu beeinträchtigen. Um den Innenbereich (2) der Heizfolie (1), ist der Außenbereich (3) der Heizfolie (1) mit einer dichteren Leiterbahnanordnung (5, 5.1), die mäanderförmig ausgebildet sein kann, angeordnet.

Vorteilhaft wird dadurch erreicht, dass die randseitige Heizfläche (3) der Heizfolie (1), aufgebracht auf der Innenseite eine Frontendmoduls/Stoßfängers im Bereich des Kennzeichenträgers (7) im Falle von widrigen Eis- oder Schneeverhältnissen, ein schnelleres Auftauen des Kennzeichenträgers (7) in diesem Randbereich (3) bewirkt und sich ein Temperaturgradient von der Radarstrahl durchsetzten Innenfläche (2) der Heizfolie (1) hin zur Außenfläche (3) der Heizfolie (1) so aufbaut, dass ein Wärmefluss zwischen Außenfläche (3) und Innenfläche (2) in Folge des Temperaturgradienten bewirkt wird.
Damit einhergehend ist die Aufheizleistung im Bereich der Außenfläche (3) der Heizfolie (1) etwa 3:1 bis 1,05 : 1 größer eingestellt, als im Radarstrahl durchsetzten Innenbereich (2) der Heizfolie (1). Dies kann dadurch erreicht, dass die Länge der Leiterbahnen (5,5.1) der Außenfläche (3) der Heizfolie (1) in etwa in diesem Verhältnis länger sind, als die Länge der Leiterbahnen (4.1, 4.2 und 4.3) der Innenheizzone (2) der Heizfolie (1). Der Widerstand der Leiterbahnen (4; 4.1, 4.2 und 4.3) liegt im Bereich von 4 bis 12 Ohm.

Das elektronische Regelelement (10) bestimmt den Einschaltpunkt der Aufheizung für Außentemperaturen im Bereich von bspw. -15° C bis + 15°C und steht mittels nicht dargestellter Steckverbindung mit dem Bordnetz (10a) des Kraftfahrzeugs in elektrischer Verbindung.

Denkbar in diesem Erfindungszusammenhang ist auch, dass ein Außentemperaturfühler - via Funk oder elektronischer Verbindung - das elektronische Regelelement (10) zur Heizungssteuerung ansteuert und die Heizfolie (1) mit ihren Leiterbahnen (4; 4.1, 4.2, 4.3 ; 5, und 5.1) einsatzgemäß steuert und regelt.

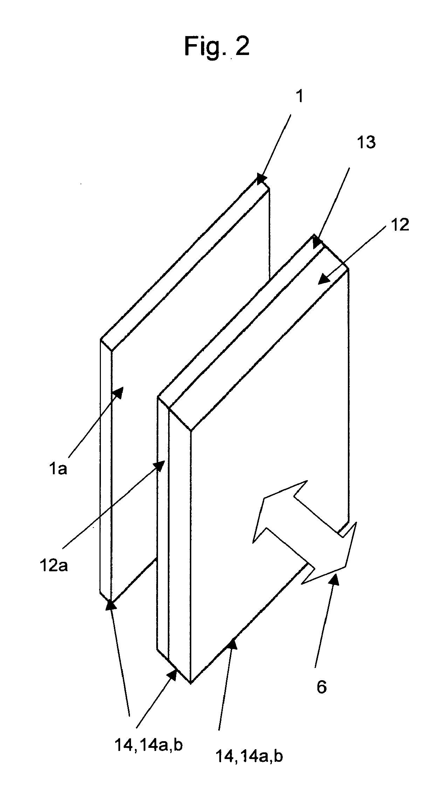

Fig. 2 zeigt schematisch den Aufbau der Heizfolie (1) mit innenbeschichteter Abdeckfolie (12) als weiteres Ausführungsbeispiel. Komponenten, die denjenigen entsprechen, die vorstehend schon unter Bezugnahme auf Fig. 1 erläutert wurden, tragen die gleichen Bezugsziffern und werden nicht nochmals im Einzelnen diskutiert.

Die Heizfolie (1) mit einem Innenbereich (2) und einem Außenbereich (3), Anschlusspads (9) sowie den Leiterbahnen (4, 4.1, 4.2, 4.3 ; 5 und 5.1) sind durch eine zusätzliche Abdeckfolie (12), aus geschäumten Polyethylen und/oder Polypropylen - auch vernetztes Polypropylen - bestehend, mit einer Schichtdicke im Bereich von 1 bis 1,5 mm, versehen. Die Abdeckfolie (12) kann auf ihrer Innenseite (12a), d.h. hin zu den Leiterbahnen (4, 4.1, 4.2., 4.3 , 5 und 5.1) der Heizfolie (1) mit einer Siliziumoxid- (SiO) und/oder Siliziumnitrid-(SiN) und/oder Siliziumoxinitrid-Beschichtung (13) versehen sein.

Diese Schichten (13) wirken als Wärmereflexionsschichten und liegen im Schichtdickenbereich von 300 bis 900 µm, wobei die Dämpfung des Radarsende- und Empfangssignals im Sendefrequenzbereich von 76 bis 78 GHz nur minimal ist.
Damit wird auch ein zusätzlicher Schutz vor bspw. Schmutz-/Salzwassereintrag hinsichtlich der Heizfolienoberfläche (1 a) erreicht und eine randseitig umlaufende Einfassung (14) der Heizfolie (1) mit innenbeschichteter Abdeckfolie (12,13) bewirkt einen weiteren Schutz durch die Verwendung eines Versiegelungslacks (14a) bzw. einer Versiegelungspaste/schaums (14b) oder Schmelzklebers.

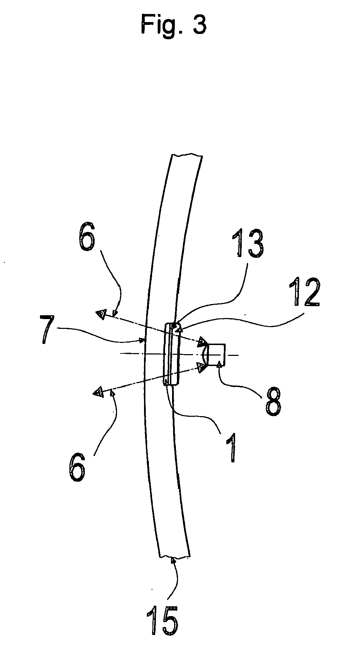

In Fig. 3 ist ein Teil einer Anordnung eines Frontmoduls/Stoßfängers (15) mit Kennzeichenträger (7) eines nicht weiter dargestellten Kraftfahrzeuges gezeigt, wobei auf der Innenseite der Anordnung (15), im Bereich des Kennzeichenträgers (7), eine Heizfolie (1) mit Abdeckfolie (12,13) in Wirkverbindung mit der Radarsende-/-empfangseinheit (8) stehend, schematisch abgebildet ist.
Komponenten, die denjenigen entsprechen, die vorstehend schon unter Bezugnahme auf Fig. 1 und Fig. 2 erläutert wurden, tragen die gleichen Bezugsziffern und werden nicht nochmals im Einzelnen diskutiert.

Die Radarsende-/-empfangseinheit (8) mit dem Radarsignal (6) ist in Fig. 3 mit einem beidseitigen Pfeil nur angedeutet. Der Radarsendestrahl (6) durchläuft als polarisierter Strahl die Abdeckfolie (12,13) und anschließend die Heizfolie (1) im Bereich der inneren Heizzone (2) und durchdringt danach die aus einem polymeren Material bestehende Außenhaut des Frontmoduls/Stoßfängers (15) bspw. im Bereich des Kennzeichenträgers (7). Die verwendeten Materialien des Frontmoduls/Stoßfängers bestehend aus einer Polycarbonat (PC) - Polybutylenterephtalat (PBT)-Mischung bzw. einer Polypropylen (PP) - Ethylen-Propylen-Dien-Monomer (EPDM)-Mischung, zeigen bei einer Gesamtmaterialstärke der Anordnung im Bereich von 2,2 bis 3,8 mm und unter Berücksichtigung der 45° bis 90° Gradlage der Leiterbahnen (4, 4.1, 4.2 und 4.3) im Innenbereich (2) der Heizfolie (1), eine maximale Dämpfung von 0,4 bis 2 dB pro radardurchstrahlter Flächeneinheit im Frequenzbereich von 76-78 GHz.

## Patentansprüche

1. Heizungselement auf einer polymeren Innenoberfläche eines Frontmoduls/ Stoßfängers (15) eines Kraftfahrzeuges in Wirkverbindung zu einer Radarsende-/-empfangseinheit (8), **gekennzeichnet durch** die Kombination folgender Merkmale:
-a- eine polymere Heizfolie (1) mit integrierten Leiterbahnen (4, 4.1.,4.2,4.3; 5, 5.1) verwendet wird, wobei
-b- die Heizfolie (1) aus einem Polycarbonat (PC) und/oder Polybutylenterephtalat (PBT) und/oder aus einem vernetzten Polyethylen (PE-X) besteht und
-c- die Dicke der Heizfolie (1) im Bereich von 0,1 bis 0,3 mm liegt, wobei
-d- die Leiterbahnbreite (4, 4.1.,4.2,4.3; 5, 5.1) des Leiterbahnarrays zwischen 0,4 bis 2 mm liegt und
-e- das Leiterbahnarray der Heizfolie (1) in einen radarstrahldurchgehenden Innenbereich (2) und einen nicht radarstrahlendurchgehenden Außenbereich (3) aufgeteilt ist, wobei
-f- die Leiterbahnen (4, 4.1., 4.2, 4.3) im Innenbereich äquidistant in einem Abstand von jeweils 2,8 bis 6 mm um 45 ° bis 90° Grad zur Radarstrahlpolarisationsebene (6) geneigt sind und
-g- die Leiterbahnen (5, 5.1) im Außenbereich (3) in einem Abstand von jeweils 1 bis 6 mm mäanderförmig verlaufen und
-h- die Anschlussverbindung (9a) der Leiterbahnen (4, 4.1., 4.2, 4.3; 5, 5.1) zum Bordnetz (10a) des Kraftfahrzeuges über Anschlusspads (9) in elektrischer Schaltungsverbindung mit einem elektronischen Regelelement (10) steht, wobei
-i- das elektronische Regelelement (10) den Einschaltpunkt zum Aufheizen der Heizfolie (1) mit den Leiterbahnen (4, 4.1.,4.2, 4.3; 5, 5.1) regelt und
-j- eine Heizleistung im Bereich von etwa 10 bis 150 Watt auf die Leiterbahnen (4, 4.1., 4.2, 4.3; 5, 5.1) der Heizfolie (1) bis zum Abschaltpunktzeitpunkt elektronisch gesteuert **durch** das Regelelement (10) aus dem Bordnetz (10a) eingespeist wird.

2. Heizungselement auf einer polymeren Innenoberfläche eines Frontmoduls/ Stoßfängers (15) eines Kraftfahrzeuges nach Anspruch 1, **dadurch gekennzeichnet, dass** das elektronische Regelelement (10) angepasst an die Außentemperatur in einem Temperaturbereichsintervall von -15°C bis +15°C die Heizleistung der Heizfolie (1) mit den Leiterbahnen (4, 4.1., 4.2, 4.3; 5, 5.1) steuert.

3. Heizungselement auf einer polymeren Innenoberfläche eines Frontmoduls/ Stoßfängers (15) eines Kraftfahrzeuges nach Anspruch 1 und 2, **dadurch gekennzeichnet, dass** das elektronische Regelelement (10) ein PTC- oder NTC-Element ist.

4. Heizungselement auf einer polymeren Innenoberfläche eines Frontmoduls/ Stoßfängers (15) eines Kraftfahrzeuges nach Anspruch 1, **dadurch gekennzeichnet, dass** der Außenbereich (3) der Heizfolie (1) als Zone mit erhöhter Heizleistung gegenüber dem radardurchstrahlten Innenbereich (2) der Heizfolie (1) ausgelegt ist.

5. Heizungselement auf einer polymeren Innenoberfläche eines Frontmoduls/ Stoßfängers (15) eines Kraftfahrzeuges nach Anspruch 1, **dadurch gekennzeichnet, dass** das Verhältnis der Außenbereichsheizleistung zur Innenbereichsheizleistung der Heizfolie (1) zwischen 3 :1 und 1,05 :1 liegt.

6. Heizungselement auf einer polymeren Innenoberfläche eines Frontmoduls/ Stoßfängers (15) eines Kraftfahrzeuges nach Anspruch 1, **dadurch gekennzeichnet, dass** die Innenbereichsheizzone (2) und/oder Außenbereichsheizzone (3) mit den Leiterbahnen (4, 4.1, 4.2, 4.3; 5, 5.1) der Heizfolie (1) mindestens zweifach redundant ausgelegt ist.

7. Heizungselement auf einer polymeren Innenoberfläche eines Frontmoduls/ Stoßfängers (15) eines Kraftfahrzeuges nach Anspruch 1, **dadurch gekennzeichnet, dass** eine zusätzliche Abdeckfolie (12) aus geschäumten Polyethylen oder Polypropylen auf die Heizfolie (1) aufgebracht ist mit einer Schichtdicke im Bereich von 1 bis 1,5 mm.

8. Heizungselement auf einer polymeren Innenoberfläche eines Frontmoduls/ Stoßfängers (15) eines Kraftfahrzeuges nach Anspruch 7, **dadurch gekennzeichnet, dass** auf der Innenseite (12a) der Abdeckfolie (12) hin zu den Leiterbahnen (4, 4.1., 4.2, 4.3; 5, 5.1) der Heizfolie (1) eine Wärmereflexionsbeschichtung (13) aufgebracht ist.

9. Heizungselement auf einer polymeren Innenoberfläche eines Frontmoduls/ Stoßfängers (15) eines Kraftfahrzeuges nach Anspruch 8, **dadurch gekennzeichnet, dass** die Wärmereflexionsbeschichtung aus einer Siliziumoxid- und/oder einer Siliziumnitrid- und/oder einer Siliziumoxinitridschicht besteht.

10. Heizungselement auf einer polymeren Innenoberfläche eines Frontmoduls/ Stoßfängers (15) eines Kraftfahrzeuges nach Anspruch 8 und 9, **dadurch gekennzeichnet, dass** die Wärmereflexionsschicht (13) eine Schichtdicke im Bereich von 300 bis 900 µm hat.

11. Heizungselement auf einer polymeren Innenoberfläche eines Frontmoduls/ Stoßfängers (15) eines Kraftfahrzeuges nach einem der vorhergehenden Ansprüche, **dadurch gekennzeichnet, dass** die Heizfolie (1) und die Abdeckfolie (12) mit der Wärmereflexionsschicht (13) mittels eines Versiegelungslacks (14a) oder Versiegelungspaste/-schaum oder Schmelzklebers (14b) als Randeinfassung (14) umlaufend eingefasst ist.

12. Heizungselementanordnung in Wirkverbindung zu einer Radarsende-/-empfangseinheit (8) auf einer polymeren Innenoberfläche eines Frontmoduls/Stoßfängers (15) eines Kraftfahrzeuges nach einem oder mehreren der vorhergehenden Ansprüche 1 bis 11.

13. Heizungselementanordnung in Wirkverbindung zu einer Radarsende-/-empfangseinheit (8) auf einer polymeren Innenoberfläche eines Frontmoduls/Stoßfängers (15) eines Kraftfahrzeuges nach Anspruch 12, **dadurch gekennzeichnet, dass** die Heizfolie (1) gemäß Patentanspruch 1 auf der Innenoberfläche des Frontmoduls/ Stoßfängers (15) im Bereich des Kennzeichenträgers (7) in einer mittigen Lage vor einer Radarsende-/-empfangseinheit (8) angebracht ist.

14. Heizungselementanordnung in Wirkverbindung zu einer Radarsende-/-empfangseinheit (8) auf einer polymeren Innenoberfläche eines Frontmoduls/Stoßfängers (15) eines Kraftfahrzeuges nach Anspruch 12 und 13, **dadurch gekennzeichnet, dass** das Radarsende- Empfangssignal (6) der Radarsende-/-empfangseinheit (8) im Sendefrequenzbereich von 76 bis 78 GHz eine Signaldämpfung von etwa 0,4 bis 2 dB bei einer Gesamtdicke des Frontmoduls/Stoßfängers von 2,2 bis 3,8 mm aufweist, wobei das Frontmodul/der Stoßfänger aus einer PC-PBT-Materialmischung oder PP-EPDM-Materialmischung besteht.
